Europäisches Patentamt

**European Patent Office**

Office européen des brevets

(11) Publication number: **0 020 920**
A1

# EUROPEAN PATENT APPLICATION

(21) Application number: 80102165.0

(51) Int. Cl.³: **G 01 G 19/413**, G 07 G 1/02

(22) Date of filing: 23.04.80

(30) Priority: 24.04.79 US 32912

(43) Date of publication of application: 07.01.81
Bulletin 81/1

(84) Designated Contracting States: **DE FR GB NL**

(71) Applicant: FRANKLIN ELECTRIC Co., Inc., 400 East Spring Street, Bluffton Indiana 46714 (US)

(72) Inventor: Navin, James P., 5126 County Line Road, Racine Wisconsin 53403 (US)
Inventor: Cordier, Franklin L., Rte. 1, Box 11, Bluffton Indiana 46770 (US)
Inventor: Woods, Richard E., //, Markle Indiana (US)
Inventor: Bonness, Donald A., 1336 Kenwood Drive, Bluffton Indiana (US)

(74) Representative: Goddar, Heinz, Dr. et al, FORRESTER & BOEHMERT Widenmayerstrasse 5/IV, D-8000 München 22 (DE)

(54) Apparatus and method for computing the cost of a commodity and for printing a label, the commodity being associated with a key code.

(57) This disclosure relates to a system for weighing one or more articles, automatically computing the price of an article, and printing data including the price on a label that is normally attached to the article. The system is designed for use with a variety of different articles or commodities, and each commodity is assigned a code or key number. The system includes a number of memory units, and information relating to each commodity is stored in the memories. The information may include price per pound, tare weight, commodity name, etc. When a particular commodity is to be weighed, the key number associated with the commodity is inserted by an operator into the system, thereby withdrawing the information from memory for use in computing the total price and in printing a label. The system may further include means for formulating a universal product code (UPC) marking and printing the code marking on the label.

1.

0020920

Numerous systems have been provided and many patents have issued covering computing weighing scale systems. Generally, such prior art systems are designed automatically to weigh one or a series of articles, compute the cost of each article, and print a label containing the name, weight, price per pound, and cost of the article. Some systems also include a label applicator for automatically attaching the label to the article.

In such a system it has been necessary for an operator to insert data regarding the article into the system. This data or information includes the price per pound and the name of the article. Usually the price per pound is inserted using price knobs, and the name is inserted using a print or commodity slug that has name printing type on it. U.S. patent No. 3,459,271 discloses such a system that includes a number of scales and a central computer. A commodity printing plate has type on it for printing the name and code pins for setting the name in the computer. The patent also states that certain commodity information may be stored in the computer, and a number associated with a commodity which may be set in the system using the printing plate or a keyboard.

A disadvantage of all of the foregoing described prior art systems is that they require a commodity slug or plate for each type of article. A modern supermarket or delicatessen handles a large variety of articles or commodities, and consequently such a prior art system must include a rack of loose commodity plates. Thus prior art systems are disadvantageous for a number of reasons. They rely on the operator to set a number of factors into the system, using the printing plate and the price knobs, or using code pins or a keyboard. The plates are troublesome to handle and store, and they may easily be damaged or lost. Further, it is relatively difficult to make changes in the data, such as a price change, and this is especially important in a system including two or more scales.

It is therefore an object of the present invention to provide a computing scale system that avoids the foregoind disadvantages.

A system in accordance with the present invention comprises a processor that receives a weight indication from a scale and a key number from a keyboard. Each key number is associated with a commodity. Various commodity data such as name, price, tare, grade, point of purchase messages, etc. are stored in memory units connected to the processor. Insertion of the key number by an operator retrieves the commodity data, and a weight indication combined with the price produces a total cost computation. The weight, price per pound, total cost, and other commodity data are fed to a printer which automatically prints a label without the use of a commodity plate.

The system may further include connections to a transfer-and-labeling machine, and an electronic printer that prints the above information in human readable form and also prints the commodity name and the cost in machine-readable form (UPC).

The foregoing and other objects and advantages of the present invention will be better understood from the following detailed description taken in conjunction with the accompanying figures of the drawings wherein:

Figure 1 is a diagrammatic view of a multiple scale system embodying the invention;

Figure 2 is a diagrammatic view of a single scale system embodying the invention;

Figure 3 is a view of a control panel of the system;

Figure 4 is a view of a label produced by the system; and

Figure 5 is a flow chart showing the operation of the system.

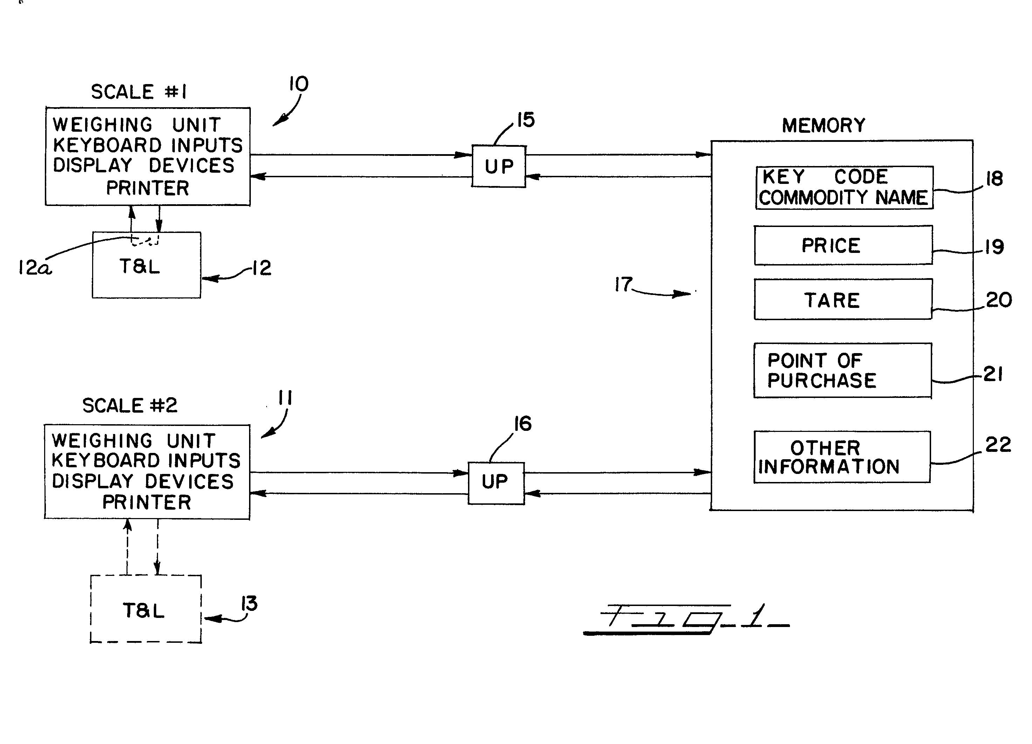

With reference first to Figure 1, the system includes a first computing scale 10 and a second computing scale 11. As the term is used herein, the scale 10 includes a weighing unit or cell, operator inputs, information displays, and a printer, and the scale 11 is generally similar to the scale 10. The scale 10 is associated with a transfer-and-labeling (T & L) machine 12 and the scale 11 may or may not be associated with a T & L 13. The scales 10 and 11 are respectively connected to processors 15 and 16, and a memory or storage unit 17 is also connected to the processors. The unit 17 includes a number of memories 18 to 22 for storing such information as commodity name, price per pound, tare, point-of-purchase messages, and other desired information. The information stored in the unit 17 is available to both of the processors 15 and 16.

The system as illustrated in Figure 1 may be used, for example, in a supermarket. The scale 10 with the T & L may be located in the meat section and the scale 11, without the T & L 13, may be located in the delicatessen section. Each of the scales 10 and 11 may have the associated processor 15 or 16 mounted in the scale cabinet, separate from the scale cabinet, or closely associated with the memory unit 17. As mentioned above, the invention also includes an arrangement having only a single scale, with or without a T & L, a processor and a memory unit, and these components may be contained in a single cabinet.

In a system including two or more scales, the memory unit 17 may be part of a central computer. In a large

4.

0020920

store having an in-store computer, the in-store computer may be utilized as the central scale computer. In a large chain of stores, a centrally located computer may contain the memory unit and be connected to the scales. In systems including a central computer, the scale processors 15 and 16 may also be included in the central computer, although it is preferred that each scale be provided with a separate processor. Of course, a system may also be provided including only a single scale and a central computer.

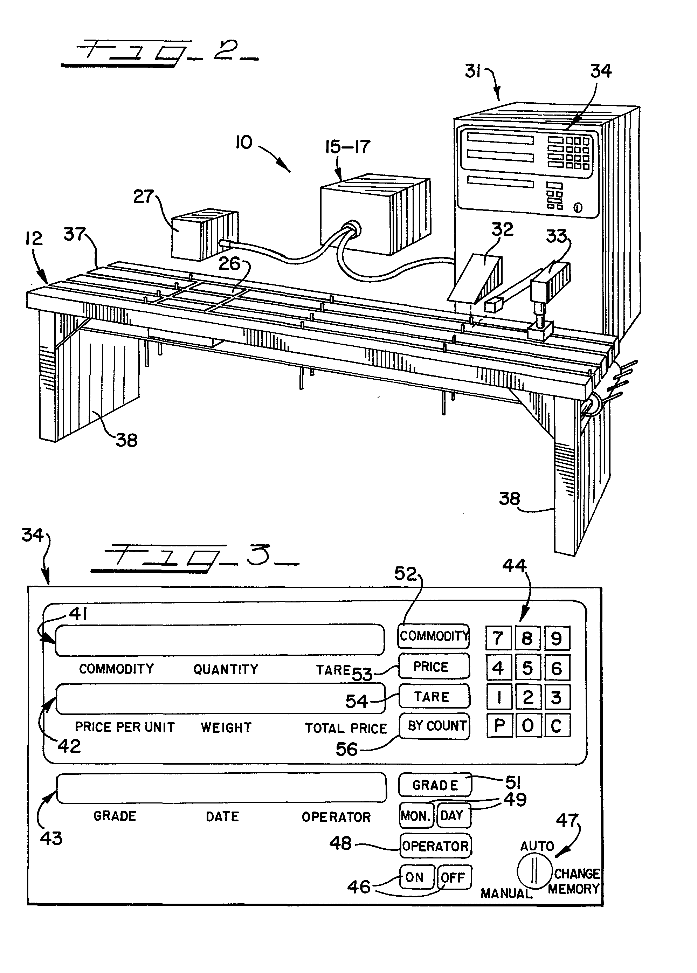

Figure 2 illustrates a specific example of the scale 10. The scale 10 may be of the character described in U.S. patent No. 3,712,395 and includes a scale pan 26 and a housing 27. The scale load cell produces a signal having a frequency that is a function of the weight on the pan 26, and the scale includes conventional circuitry for converting the variable frequency weight signal to multi-digit BCD form, suitable for input to the processor 15.

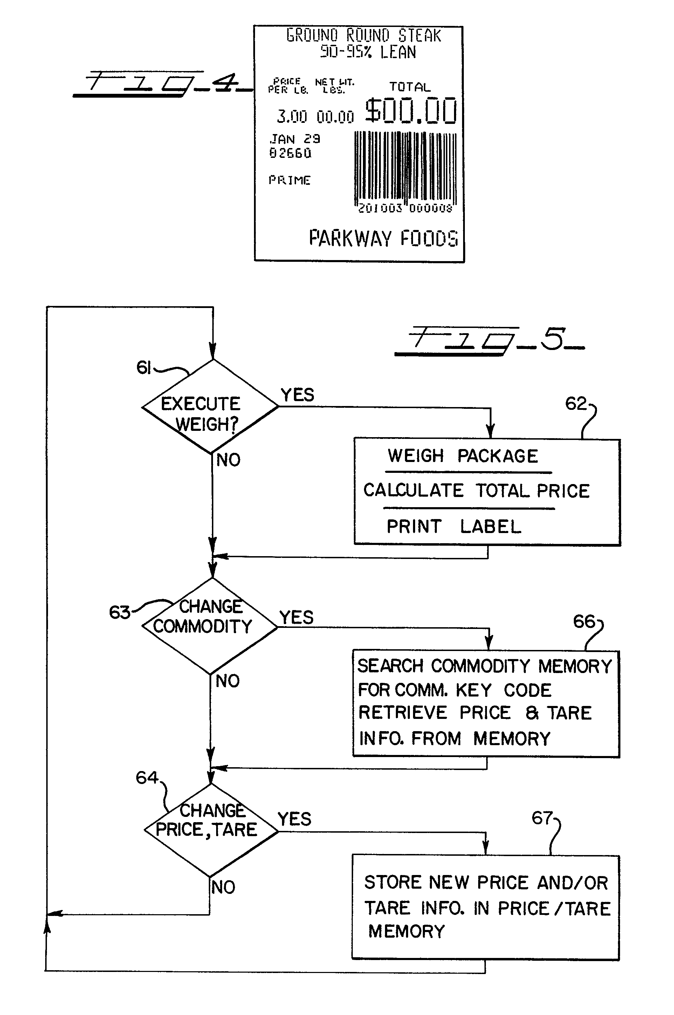

In the specific example illustrated, a separate housing or cabinet 31 is provided for a label printer (not shown). The cabinet 31 further houses a label chute 32 that receives labels from the printer, and an automatic label applicator 33 is schematically shown for removing the labels from the chute 32 and applying them to articles. The cabinet 31 also supports a control panel, or operator interface 34, shown in detail in Figure 3.

The T & L 12 is positioned in front of the scale 10 and forms an elongated conveyor table 37 that is supported by legs 38. It includes means for moving one or a series of articles (not shown) from left to right as seen in Figure 2, first past the scale pan 26 and then past the label applicator 33. The moving means usually includes a series of pusher arms or fingers that move the articles along the table 37, with momentary stops while each article is first on the pan 26 for weighing and then in front of the applicator 33 for receiving a printed label.

Numerous label applicator, label chute and T & L constructions are known in the art, which are suitable for use in the present system, and therefore such constructions are not described in detail herein. U.S. patent No. 3,815,898 shows a suitable arrangement of a label chute and a label applicator used in conjunction with a computer scale, and U.S. patent No. 3,384,524 shows a suitable arrangement of a transfer and labeling machine used with a computer scale and an automatic label applicator.

Figure 1 indicates a connection between the T & L 12 and the scale 10, and this connection may comprise an electrical open-closed switch 12a that is actuated by the transfer mechanism of the T & L. Each time the T & L moves an article to a position on the pan 26, the T & L allows the article to remain momentarily stationary while it is being weighed and the T & L actuates the switch 12a. Such actuation enables the processor 15 and the printer to start a cycle of operation.

The present system has a capacity to handle a wide variety of different article types or commodities. For example, in a meat section of a store, the system may handle a large number of different commodities such as different types, cuts and grades of meat. It is an important feature of the present invention that each commodity is assigned or associated with a specific key code such as a number, and that all data related with each commodity is stored in the memory unit 17. By manually inserting a key number into the system, using the control panel 34, the data associated with the key number and commodity are retrieved from the memory unit 17 and utilized by the processor 15 and the printer. It is another important feature that at least some of the data in the memory unit may be changed by the operator, using the key number. By the present arrangement, the prior art necessity of a commodity slug or plate for each commodity is eliminated.

With reference to Figure 3, the panel includes a number of electronic visual readouts 41, 42 and 43 for displaying commodity data after a key number has been inserted. A numerical keyboard 44 is provided to enable the system operator to insert a key number. ON-OFF buttons 46 start and turn off the system, and a selector switch 47 allows the operator to set the system for manual, automatic or change memory operation. The system when used with a T & L is normally set for automatic operation and when used in delicatessen operation is normally set for manual operation. The change memory operation is used when, for example, a price-per-pound figure in the memory 19 is to be changed. Buttons 48 and 49 are used to insert an operator identification and the date, the operator first pressing the buttons 48 and 49 and then inserting numbers at the keyboard 44. The commodity grade is inserted using a button 51, the grade being advanced sequentially by repeatedly pressing the button 51.

The commodity button 52 is pressed to set the system to process a particular commodity or to change from one commodity to another. The operator sets the switch 47 for manual or automatic operation, presses the button 52, and then inserts a key number at the keyboard 44.

If the price per pound figure stored in the memory unit 17 of a particular commodity is to be changed, the operator sets the switch 47 for change memory operation, presses the button 52 and inserts the identifying key number at the keyboard 44, presses price button 53 and then inserts the new price figure at the keyboard 44.

If the tare weight is also to be changed, the operator also presses a tare button 54 and then inserts the new tare weight at the keyboard. The switch 47 is then returned to manual or automatic operation.

The system is also usable in a BY COUNT mode of operation for handling, for example, produce. A commodity may be sold at a certain price per dozen, for example, and a button 56 is pressed for such operation. The operation in this mode is otherwise similar to that for the price per pound mode, except that a weight input from the scale is not necessary. Data for the BY COUNT mode may be stored in the memory 22.

Figure 5 is a flow chart illustrating the system operation in the automatic, price per pound mode. Assuming first that the price, tare and any other data for a commodity are stored in the memory unit 17, the operator turns the system on, presses the commodity button 52 and manually inserts a key number in the keyboard 44. The processor includes a register that searches the memory 18 for the inserted key number, and when the key number is located the register retrieves the name, price, tare, etc. from the memories. The retrieved data is fed to the displays 41 and 42 and to the printer, and the price data is fed to the total cost computing circuits of the processor. After the T & L 12 moves an article onto the pan 26, the actuated switch 12a provides a ready signal that is responded to by the scale and the processor circuitry as is known in the prior art. The first step in the cycle is a decision box 61 where the system questions whether a cycle should be initiated. If the ready signal from the T & L switch 120 is present, the decision is YES and the system or method proceeds to step 62 where the output signal from the weighing or load cell is taken and combined with the price per pound figure received from the memory unit 17 and the total price or cost is calculated. The price and the other data from the memory associated with the key number are passed to the printer and a label is printed. The printer drops the printed label into the chute 32, and the applicator 33 removes the label and attaches it to the article. The T & L has moved the article from the pan 26 to the applicator while the cost is being computed and the label is being printed. Following the application of the label to the article, the T & L pushers move the article to the end of the table 37 where it is removed. As is well known in the art, a series of such articles are sequentially processed as described.

Following the weighing, computing and printing operations at the step 62, the system proceeds to the decision step 63 where it is questioned whether the commodity is to be changed. Assuming for the time being that it is not to be changed, the decision is no and the system proceeds to step 64 where it is questioned whether the price or tare is to be changed. Assuming again that no change is to be made, the system loops back to step 61 and a new cycle begins. Shortly after a weight reading of an article has been taken, the T & L moves the article from the scale pan and thereby removes the reading signal from the switch 12a. In the usual operation, another article is placed on the pan 26 immediately after the preceding article is removed, and each such movement actuates the switch 12a. In each such cycle, the system proceeds through the loop including steps 61, 62, 63 and 64.

In the event the T & L moves and actuates the switch 12a but an article is not present on the pan 26, the system detects a zero weight situation and the decision of the box 61 is no.

In the event the operator has been processing one commodity using the system and then is ready to process a different commodity, the operator presses the button 52 before the first of the new commodity line is on the scale. In the absence of an article on the scale pan, the method proceeds from step 61 directly to box 63, and since button 52 has been pressed, the method branches to step 66. The operator inserts the key number for the new commodity in the keyboard 44 and the processor register retrieves the data for the new commodity from the memory unit 17 for use in the next computation and print cycle. If the price and/or tare of the new commodity are unchanged from the stored values, the buttons 53 and 54 are not pressed and the method proceeds through step 64 to step 61. If the price and/or tare are to be changed, the operator first presses the price button 53 causing the system to branch to step 67, and then enters the new price; to also change tare, the operator then presses the tare button 54 and enters the new tare. The new price and tare values are then stored in the memories 19 and 20 in place of the previously entered values, and the system then proceeds to step 61.

The key or code numbers referred to herein are multi-digit numbers associated with the various commodities, a different or distinctive number being assigned to each commodity. For example, each key number may be a four digit number, and it is preferred, for convenience, that the key numbers correspond to the system of commodity identification numbers developed for the universal product code (UPC), a number of such standard systems having been developed. As a specific example of a product code for a random weight system, the system uses four digit item identification numbers and one digit may indicate a species such as beef, another digit may indicate the primal cut such as chuck, another digit may indicate the sub-primal cut such as arm half, and the fourth digit may indicate the retail name such as arm pot-roast. For example, the code number 1007 may indicate Sirloin Tip Steak and the number 1008 may indicate Sirloin Tip Roast. Further different code numbers may indicate similar items but different point-of-purchase messages. For example, number 1041 may indicate Eye-of-the-Round Roast - Do Not Overcook, and the number 1042 may indicate Eye-of-the-Round Steak - Pan Fry - Barbecue or Broil.

In this manner, each commodity is assigned a key code or number and a variety of information associated with the commodity is stored in the memories. Insertion of a key number withdraws the associated data from the memories for use in computation and in printing the labels. Consequently the commodity slugs or printing plates required by prior art systems are eliminated.

The memories 18, 21, 22 and any other memory for data that is not changeable by the operator, are PROMs. The memories 19 and 21 are RAMs which may be changed by the operator.

The printer may print the label entirely in human-readable form or in both human and machine readable form. Prior art printers are available for printing such labels, using instructions or information received from the processor and memories. Figure 4 shows a label including both machine and human readable information printed by the Magnestylus Random Weight Label Printer Model RW-925 manufactured by the 3M Company. This printer includes components for computing the UPC line or bar markings and printing them. The processors 15 and 16 may be the Model F-8 Processor sold by the Fairchild Camera and Instrument Company, and an interface between the processors and the printer may be the RS232 Serial 9600 Baud. The NCR Company manufactures a suitable printer that does not include the machine readable UPC.

In the label shown in Figure 4, the key number is 1003 and this is also the commodity identification number that appears in the UPC marking. This key
number is assigned to Ground Round Steak, 90-95% Lean,
and this commodity name and key numbers are stored in
memory 18. The price in memory 19 amounts to $3.00
per pound. The column headings and the store name may
be preprinted on the label.

A system according to the invention for a delicatessen operation may be generally similar to the
foregoing described system. A T & L would not, of course,
be used, and the switch 12a may be a manually operated
switch that is actuated by the operator to start a
cycle. The switch 12a could also be a type that senses
motion of the scale pan or sense a steady state condition
of the weight on the pan.

The system obviously is usable with commodities that
are sold at a certain price per count number, at a certain count per dollar, and other such arrangements.

- 1 -

0020920

CLAIMS

1. Apparatus for computing the cost of a commodity and for printing a label containing information relating to the commodity, and the commodity being associated with a distinctive key code, said apparatus comprising:

Scale means 27 for weighing the commodity and for providing a weight signal;

label printing means 31 for printing data relating to a commodity on a label;

computer means including memory means 17 for storing data, characterized in that said data relates to the commodity and includes the commodity name and price, and said data being retrievable using said key code as an address;

key code input means 34 for inserting said key code into said computer means;

said computer means further including processing means responsive to said key code input means and to said scale means for retrieving said data from said memory means and computing the total cost based on said weight signal and on said price, and said total cost and said data from said computer being fed to said printer.

2. Apparatus as in Claim 1, characterized in that said computer includes a plurality of memory means 18-22 for storing data relating to a plurality of different commodities, said commodities having distinctive key codes and said data being retrievable using said key codes, whereby data for a particular commodity may be retrieved by inserting the key code for the commodity.

- 2 -

3. Apparatus as in Claim 2, characterized in that said printing means 31 includes means for printing said cost in machine-readable and human-readable form.

4. Apparatus as in Claim 1, 2 or 3, characterized in that said memory means includes a first memory 19 for said price, a second memory 20 for tare, and a third memory 18 for the key number and the commodity name, said first and second memories being RAMS and said third memory being a PROM.

5. Apparatus as in Claim 4, characterized in that said memory means further includes a fourth memory 21 for a point-of-purchase message, said fourth memory being a ROM.

6. Apparatus as in Claim 1, characterized in that a plurality of scale means 10, 11 are included, each of said scale means including a weighing unit, key code input means 34 and printing means 31, processing means being connected to each of said scale means, and said memory means being connected to said processing means and said scale means, said memory means including a plurality of memory means 18-22 for storing key codes and commodity data associated with the key codes, whereby insertion of a key code in said input means 34 retrieves data for use by said processing means and said printing means.

7. Apparatus as in Claim 6, characterized in that said scale means and said processing means are connected to the same memory means 18-22.

8. Apparatus as in any one of the preceding claims, and further including a transfer and labeling machine 12 adjacent one of said scale means, and switch means 12a for enabling operation of said scale means and said processing means in response to movement of said machine 12.

- 3 -

0020920

9. Apparatus as in Claim 1, characterized in that said apparatus handles a plurality of different commodities, each of said commodities being assigned a distinctive key code, said input means 34 including a manually operable key code selector operable to retrieve from said memory means 17 the commodity information associated with a selected key code.

10. Apparatus according to Claim 9, wherein said input means 34 further includes means connected to said processing means and said memory means for changing said data.

11. Apparatus as in Claim 1, characterized in that said memory means stores the commodity name and price, said printing means being connected to receive the commodity name and price from said memory means and to receive the total cost from said processing means.

12. A method utilizing the foregoing apparatus, characterized by the steps of assigning a distinctive key code to each of said commodities, storing the key codes, prices and names of said commodities in said memory means, selecting a commodity and inserting the assigned key code into said processing means to retrieve the price and name from said memory means, initiating a processor cycle to compute the total cost of the selected commodity, and printing a label with the computed total cost and the commodity name.

13. The method of Claim 12, and further characterized by the step of weighing the article, said total cost being computed from the weight and the price of the commodity.

14. The method of Claim 12, and further characterized by the step of attaching the label to the article.

15. The method of Claim 12, and further characterized by the steps of inserting said key code, and changing said commodity price stored in said memory means.

16. The method of Claim 12, and further characterized by the steps of storing the tare weights and point-of-purchase messages for said commodities using said key codes and printing said point-of-purchase messages on said labels.

SCALE #1

WEIGHING UNIT
KEYBOARD INPUTS
DISPLAY DEVICES
PRINTER

10

15

UP

MEMORY

KEY CODE
COMMODITY NAME — 18

PRICE — 19

TARE — 20

POINT OF
PURCHASE — 21

T&L

12a

12

17

SCALE #2

WEIGHING UNIT
KEYBOARD INPUTS
DISPLAY DEVICES
PRINTER

11

16

UP

OTHER
INFORMATION — 22

T&L

13

1/3

FIG_1

0020920

FIG-2-

FIG-3-

_FIG_4_

GROUND ROUND STEAK
90-95% LEAN

PRICE    NET WT.
PER LB.   LBS.        TOTAL

3.00  00.00   $00.00

JAN 29
02660

PRIME

201003 000008

PARKWAY FOODS

_FIG_5_

61 — EXECUTE WEIGH?

YES →

62 — WEIGH PACKAGE

CALCULATE TOTAL PRICE

PRINT LABEL

NO

63 — CHANGE COMMODITY

YES →

66 — SEARCH COMMODITY MEMORY FOR COMM. KEY CODE RETRIEVE PRICE & TARE INFO. FROM MEMORY

NO

64 — CHANGE PRICE, TARE

YES →

67 — STORE NEW PRICE AND/OR TARE INFO. IN PRICE / TARE MEMORY

NO

# EUROPEAN SEARCH REPORT

EUROPEAN PATENT Office

Application number

0020920

EP 80 10 2165

| | DOCUMENTS CONSIDERED TO BE RELEVANT | | |
|---|---|---|
| Category | Citation of document with indication, where appropriate, of relevant passages | Relevant to claim |
| X | US - A - 3 899 775 (J.M. LARSEN) <br> * Figures 1-3; column 4, line 33 - column 6, line 9 * | 1-3, 6,7,9, 11-13 |
| | -- | |
| | US - A - 4 139 892 (D.D. GUDEA et al.) <br> * Figures 1,2; column 4, line 55 - column 6, line 51 * | 1,2,4, 6,9, 12 |
| | -- | |
| | US - A - 4 051 913 (D. GUDEA) <br> * Figure 1; abstract * | 1,2,6, 9,12 |
| | -- | |
| | DE - A - 1 927 819 (W. HILLEN) <br> * Figure 1, page 11, line 1 - page 12, line 5 * | 1,6,9, 12 |
| | -- | |
| | US - A - 3 806 711 (E.E. COUSINS Jr.) <br> * Figures 1,2; column 2, lines 23-54; column 4, line 63 - column 5, line 4 * | 1,10, 15 |
| | -- | |
| | US - A - 3 145 792 (R.E. BELL) <br> * Figure 1, column 6, lines 27-32; column 8, line 41- column 9, line 20 * | 1,11 |
| | -- | |
| | US - A - 3 851 151 (A. STAMBERA et al.) <br> * Column 3, line 34 - column 6, line 47 * -- ./. | 1,4, 16 |

## CLASSIFICATION OF THE APPLICATION (Int. Cl. 3)

G 01 G 19/413
G 07 G 1/02

## TECHNICAL FIELDS SEARCHED (Int.Cl. 3)

G 01 G 19/413
G 07 G 1/00
1/02
G 06 F 15/21

## CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search <br> The Hague | Date of completion of the search <br> 04-08-1980 | Examiner <br> THIBO |
|---|---|---|

EPO Form 1503.1 06.78

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | DE - A - 2 726 860 (TOKYO ELECTRIC CO. LTD) <br><br> * Figures 3,4,6; page 7, last paragraph - page 8, first paragraph * <br><br> ---- | 10,15 | |
| | | | **TECHNICAL FIELDS SEARCHED (Int. Cl. 3)** |
| | | | |